# EUROPÄISCHE PATENTSCHRIFT

(11) **EP 0 977 809 B1**
(45) Veröffentlichungstag und Bekanntmachung des Hinweises auf die Patenterteilung: **03.09.2003**
(21) Anmeldenummer: 98924175.7
(22) Anmeldetag: 22.04.1998
(51) Int. Cl.: C08L 33/02, D06M 15/263, D06M 15/285, C08F 8/44, A61L 15/00

(54) **DRUCKFÄHIGE EINKOMPONENTENQUELLPASTE UND DEREN VERWENDUNG**
PRINTABLE ONE-COMPONENT BULKING PASTE
PATE GONFLANTE IMPRIMABLE A UN SEUL COMPOSANT

(30) Priorität: 24.04.1997 DE 19717394
(43) Veröffentlichungstag der Anmeldung: 09.02.2000
(73) Patentinhaber: Stockhausen GmbH & Co. KG, 47805 Krefeld (DE)
(72) Erfinder: HOUBEN, Jochen, D-47906 Kempen (DE); HOPPE, Oliver, D-47807 Krefeld (DE); ROULANDS, Daniel, D-47906 Kempen (DE)
(74) Vertreter: Wolff, Felix, Dr.
(86) Internationale Anmeldenummer: EP9802387
(87) Internationale Veröffentlichungsnummer: WO98047960

(56) Entgegenhaltungen:
- WO-A-94/09043
- DE-A- 19 521 431

## Beschreibung

Die vorliegende Erfindung betrifft eine druckfähige Quellpaste, die eine Mischung aus Carboxylgruppen enthaltenden Polymeren mit einem polyhydroxylgruppenhaltigen Vernetzer enthält. Die Quellpaste eignet sich zur Beschichtung von Trägermaterialien wie etwa Fasern, Vliesen, Geweben und Folien und wird auf diesen unter Temperatureinfluß zu einem wäßrige Flüssigkeiten absorbierenden Polymer vernetzt. Die Quellpaste zeichnet sich durch eine sehr hohe Lagerstabilität aus und zeigt im vernetzten Zustand außerordentlich gute und rasche Quelleigenschaften.

Superabsorbierende Polymere sind seit langem bekannt und in Form von Pulvern z. B. unter der Bezeichnung FAVOR oder CABLOC im Handel. Allerdings ist die Verarbeitung von Pulvern technisch aufwendig und, sobald der Abrieb zu einatembarem Feinanteil führt, arbeitsmedizinisch nicht unbedenklich.

Es ist bereits bekannt, die Polymerisation von Monomerlösung auf vorgefertigten Flächen oder Fäden vorzunehmen. Dieses Verfahren ist aber wegen der nötigen Schutzgastechnik und den zu beachtenden Sicherheitsvorschriften Betrieben der chemischen Industrie vorbehalten und kann nicht in Betriebe anderer Branchen wie z.B. der Druck- und Textilindustrie verlagert werden.

Auch die Lehre der EP 482 703, bei der eine Wasser-In-Öl-Emulsion eines superabsorbierenden Materials auf Aramidfasern aufgebracht und anschließend die flüssigen Bestandteile in der Wärme abgedampft werden, bietet nicht die optimale Lösung, da hier die komplette Ölphase in die Abluft gerät, weshalb aufwendige Abluftreinigungsverfahren durchgeführt werden müssen.

EP 188 091 beschreibt absorptionsfähige poröse Flächengebilde, deren Herstellung durch Foulardieren einer Mischung aus einer wäßrigen Lösung eines unvernetzten Praepolymeren mit einem Vernetzer auf ein Vlies und anschließender thermischer Vernetzung erfolgt. Nachteilig an dem genannten Verfahren ist, daß die Vernetzer vom Typ der Polyhaloalkanole, Haloepoxialkane und Polyglycidylether wegen ihrer Reaktivität erst kurz vor der Verarbeitung zugegeben werden können, da es sonst bereits bei der Lagerung zu unerwünschten Verdikkungen der Mischung kommt und daß die beschriebenen Vernetzer gesundheitlich sehr bedenklich sind.

In der EP 357 474 wird das Aufsprühen von niedrigviskosen wäßrigen Lösungen unvernetzter Polyacrylsäuren auf Flächengewebe aus Cellulose und nachfolgender thermischer Vernetzung zu wasserquellbaren Gelen durch gleichzeitig aufgebrachte Vernetzer beschrieben. Als Vernetzer werden mehrwertige Metallionen sowie Epoxide, Aziridine, Polyglycidylether beschrieben, die wegen ihres Krebs erzeugenden Potentials so gut wie nicht mehr einsetzbar sind, als besonders problematisch gelten dabei die Hygiene- und Lebensmittelverpackungsbranche. Darüber hinaus bewirken sie bei der Lagerung der Beschichtungslösungen bereits bei Raumtemperatur eine vorzeitige Vernetzung, so daß eine weitere Verarbeitung der hochviskosen bzw. gelierten Masse nicht mehr möglich ist.

Die EP 361 842 beschreibt die Herstellung absorbierender Flächengebilde unter Verwendung von Fasern aus Carboxylgruppen enthaltenden Copolymeren, die mit heterozyklischen Carbonaten oder Verbindungen mit wenigstens zwei freien Hydroxylgruppen vernetzt wurden. Die Copolymere bestehen aus 25 bis 75 Mol.% Monomeren mit Carboxylgruppen und 75 bis 25 Mol.% anderen Monomeren, wobei die Carboxylgruppen zu 20 bis 80 % neutralisiert sind. Als typische ungesättigte Carboxylatmonomere werden Dicarbonsäure(anhydride) vom Typ Maleinsäure(anhydrid) erwähnt, die mit hydrophoben Comonomeren wie beispielsweise Isobutylen, Ethylen und Styrol copolymerisiert werden. Die Ausführungsbeispiele beschränken sich auf ein Maleinsäureanhydrid/Isobutylen-Copolymer. Die so gebildeten wasserabsorbierenden Fasern haben allerdings den Nachteil, daß sie bei geringer Luftfeuchtigkeit sehr spröde und brüchig sind und bei hoher Luftfeuchtigkeit zum Kleben und Zerfließen neigen und niedrige Quellwerte aufweisen. Aus diesem Grunde werden die fragilen Gebilde auch nicht alleine, sondern nur in Kombination mit einem Stützgewebe verarbeitet. Solche Gewebe/ oder Filamentkombinationen sind aber für viele Anwendungen, wie z.B. in der Kabelindustrie oder als Backsheet in der Hygieneindustrie zu dick und damit ungeeignet.

In der DE 195 21 431 A1 wird ein Verfahren beschrieben, bei dem reaktionsfähige Vernetzer wie polyfunktionale Epoxide, Aziridine, Polyglycidether und Epihalohydrine kurz vor dem Druckvorgang zu einer wäßrigen Lösung einer vorvernetzten Polyacrylsäure gegeben werden. Obwohl hier bereits eine druckfähige Paste beschrieben wird, haben diese reaktionsfähigen Vernetzer den entscheidenden Nachteil, daß sie zum größten Teil toxikologisch äußerst bedenklich sind und deshalb in der Druckindustrie nur ungern bzw. mit strengen die Wirtschaftlichkeit des Verfahrens negativ beeinflussenden Auflagen, verarbeitet werden. Ein weiterer Nachteil dieses Systems ist es, daß die Mischung der beiden Komponenten wegen einer schon bei Raumtemperatur einsetzenden Verdickung nicht lange gelagert werden kann sondern immer wieder frisch angesetzt werden muß. In der zitierten Anmeldung wird erläutert und beispielhaft dargestellt, daß weniger reaktive Komponenten wie z.B. Substanzen mit freien Alkohol- oder Aminfunktionen als Vernetzer für Polyacrylsäuren ungeeignet sind.

In der US 4,017,653 wird ein Verfahren zur Herstellung eines absorbierenden Artikels beschrieben, der mit einem wasserquellbaren Polyelektrolyten beschichtet ist, wobei die Beschichtung aus einer Lösung des Polymers und des Vernetzers in Alkohol und/oder Wasser erfolgt. Die zur Anwendung kommenden Vernetzer sind aus der Gruppe der Halogenalkanole, Halogen-Epoxidverbindungen, Polyglycidylverbindungen und Sulfonium-Zwitterionen ausgewählt. Die Vernetzer sind aus ökologischen und gesundheitlichen Erwägungen als bedenklich einzustufen und ihre Vernetzungsaktivität ist so hoch, daß selbst bei geringen Vernetzerkonzentrationen eine die Weiterverarbeitung ausschließende Gelierung der Beschichtungslösung innerhalb von 2 Tagen eintritt.

Die WO 96/23024 beansprucht Substrate, die mit einer Mischung aus Polymer und Vernetzer beschichtet und thermisch vernetzt werden und die superabsorbierende Eigenschaften aufweisen. Im einzigen, unvollständigen, theoretischen Beispiel wird eine Kombination aus einer vorvernetzten Poly(meth)acrylsäure mit einem ungenannten, zweiwertigen Vernetzer genannt. Es finden sich keine detaillierten Ausführungen zu den Eigenschaften der Polymer/ Vernetzermischungen und zur Chemie der Vernetzer bzw. zu den Bedingungen der Vernetzung.

Der Erfindung lag deshalb die Aufgabe zugrunde, eine wäßrige, verarbeitungsfähige Paste bereitzustellen, die bereits den Vernetzer enthält und trotzdem über längere Zeit lagerfähig ist, ohne daß es bei der Lagerung zu einer die Verarbeitung behindernden Erhöhung der Viskosität kommt. Unter druckfähig wird dabei verstanden, daß weitere Zusätze zur Paste vor der Aufbringung auf ein vorgefertigtes Flächengebilde nicht zwingend notwendig sind, um die nach einer anschließenden thermischen Nachbehandlung gewünschte Eigenschaft zu erbringen, d.h. in Gegenwart von Wasser oder wäßrigen Lösungen rasch zu quellen und dabei das ursprüngliche Volumen zu vervielfachen. So soll die in der Kabelindustrie geforderte Quellung bei einem Trockensubstanz-Auftrag von 100 g/m² mindestens 8 mm, vorzugsweise 10 mm, und besonders bevorzugt mindestens 12 mm, erreichen, und um einen Wassereintritt schnell zu blockieren, d. h. eine sehr gute wasserabdichtende Wirkung zu erzeugen, eine relative Quellhöhe nach 30 Sekunden von wenigstens 4 mm/100 g aufweisen. Um eine ausreichende Gelstabilität zu gewährleisten, sollte die Retention Werte von mindestens 15 g/g Polymer, vorzugsweise jedoch mindestens 25 g/g, und besonders bevorzugt mindestens 40 g/g aufweisen, da sonst davon auszugehen ist, daß die im Kurzzeittest ermittelte Quellhöhe bei längerem Kontakt mit Wasser wieder abnimmt.

Weiter muß die Paste frei sein von leichtentzündlichen oder gefährlichen Stoffen und sollte bei Raumtemperatur das für ein Druckmedium erwünschte Viskositätsverhalten aufweisen. Gleichzeitig sollte ein möglichst geringer Fadenzug auftreten. Insbesondere sollten die Vernetzer keine gesundheitsgefährlichen Stoffe wie etwa Epoxide, Halohydrine und sonstige Halogenverbindungen enthalten. Die Vernetzung sollte bei Temperaturen von 150°C bis 250°C durchführbar sein, wobei wegen der thermischen Belastbarkeit des Basismaterials und aus wirtschaftlichen Gründen Vernetzungszeiten von wenigen Minuten gefordert sind. Insbesondere ist es bevorzugt, wenn die Vernetzung bei einer Temperatur von 180°C nach fünf Minuten bzw. bei 200°C nach einer Minute vervollständigt ist. Danach muß das bedruckte Flächengebilde aufrollbar sein, ohne daß es zu Zusammenklebungen kommt und es sollten so gut wie keine migrationsfähigen Substanzen mehr vorhanden sein.

Die erfindungsgemäße Aufgabe wurde überraschenderweise durch eine Kombination aus einem wasserlöslichen, Carboxylgruppen enthaltenden Polymeren (bevorzugt teilneutralisierte Polyacrylsäure), das zu mehr als 75 Mol.% aus carboxylgruppenhaltigen Monomeren aufgebaut ist und wenigstens einem mehrfachfunktionellen alkoxylierten Alkohol in wäßriger Lösung gelöst, wobei die wäßrige Abmischung aus carboxylgruppenhaltigen Polymeren und mehrfachfunktionellem Alkohol sowie ggf. weitere Zusatzstoffe enthalten kann.

Unter mehrfachfunktionellen Alkoholen werden nachfolgend auch die Alkoxylierungsprodukte, insbesondere die Ethoxylierungsprodukte von Aminen und Aminoalkoholen verstanden, die mindestens 2 OH-Gruppen enthalten. Im einzelnen seien beispielsweise Ethoxylate von Ethylenglykol mit einer Molmasse von 200 bis 1000, sowie Glycerin, Trimethylolpropan, Butandiol, Pentaerythrit und Sorbitöl genannt. Weiter kommen Ethoxylate von Ethylendiamin, Diethylentriamin oder Ethanolamin, Diethanolamin oder Triethanolamin in Frage. Auch ist der Einsatz von Kondensationsprodukten von Ethanolaminen mit Polycarbonsäuren, wie Bernsteinsäure oder Adipinsäure als Vernetzer möglich. Die ethoxylierten Vernetzer sind überraschenderweise besser wirksam als die nicht ethoxylierten Grundmoleküle und werden deshalb bevorzugt. Die Anzahl der OH-Einheiten in den Ethoxylatketten soll bevorzugt den Wert von 10 nicht überschreiten.

Gegenstand der Erfindung ist somit eine Quellpaste aus einer wäßrigen Abmischung wenigstens eines wasserlöslichen, Carboxylgruppen enthaltenden Polymeren und wenigstens eines mehrfachfunktionellen Alkohols sowie ggf. weiteren Zusatzstoffen, die dadurch gekennzeichnet sind, daß die Polymeren zu mehr als 75 Mol. % aus carboxylgruppenhaltigen Monomeren aufgebaut sind, deren Carboxylgruppen zu 40 bis 65 Mol.% neutralisiert sind, und daß der als Vernetzer dienende mehrfachfunktionelle alkoxylierte Alkohol in einer Konzentration von 0,5 bis 30 Gew.%, bezogen auf das Gewicht des eingesetzten wasserlöslichen, carboxylgruppenhaltigen Polymers vorhanden ist.

Überraschenderweise hat sich gezeigt, daß zur Lösung der erfindungsgemäßen Aufgabe die Carboxylgruppen des eingesetzten carboxylgruppenhaltigen Polymeren, bevorzugt Polyacrylsäure, zu 40 bis 65 Mol.%, vorzugsweise zu 45 bis 60 Mol.%, als Salz vorliegen müssen. Salze werden durch einwertige Kationen gebildet wie beispielsweise Kalium, Natrium, Ammonium und Alkylammonium. Liegt der Neutralisationsgrad oberhalb der erfindungsgemäßen Grenzen, so kommt es unter den angegebenen Bedingungen nur zu einer sehr schwachen Vernetzung. Bei einem so hergestellten Produkt bildet sich ein sehr weiches Gel, welches zwar Wasser absorbieren kann, bei dem sich aber keine Quellhöhe bestimmen läßt. Beträgt der Neutralisationsgrad weniger als 40 Mol. % kommt es zwar zu einer Vernetzung, aber das erhaltene vernetzte Polymerisat quillt in Kontakt mit wäßrigen Lösungen nur in einem sehr geringen Umfang und vor allem sehr langsam.

Als vernetzend wirkende mehrfachfunktionelle alkoxylierte Alkohole sind besonders geeignet solche auf Basis der Mitglieder der Gruppe, die aus Ethylenglykol, 1,3,-Propylenglykol, Glycerin, 1,4-Butandiol, Trimethylolpropan, Erythrit, Pentaerythrit und hydrierten Zuckern ausgewählt sind. Die mehrfachfunktionellen Alkohole können allein oder in Mischung untereinander eingesetzt werden. Die Alkoxylierung erfolgt mit Alkylenoxiden, bevorzugt Ethylenoxid. Im einzelnen sind hier beispielsweise zu nennen die Ethoxylate von Ethylenglykol sowie von Glycerin, Trimethylolpropan, 1,4- Butandiol, Pentaerythrit und/oder Sorbitol, wobei diese Ethoxylate bevorzugt eine Molmasse von 200 bis 1000 aufweisen, wobei mindestens 1 Mol Ethylenoxid pro Mol Alkohol, bevorzugt mindestens 1 Mol Ethylenoxid pro Mol OH-Gruppe, umgesetzt wird.

Die erfindungsgemäßen Mischungen aus Polymer und Vernetzer sind über einen langen Zeitraum ohne Verlust der Eigenschaften lagerbar, insbesondere weisen sie eine ausgezeichnete Viskositätsstabilität auf. Dies ermöglicht die Vorfertigung gebrauchsfertiger Quellpasten und befreit den Endverbraucher von dem Zwang, die Pasten mit Vernetzern abzumischen.

Der Polymergehalt der wäßrigen Lösungen beträgt aus wirtschaftlichen und technischen Gründen mindestens 10, bevorzugt aber mehr als 30 Gew.%, wobei allerdings gegebenenfalls je nach Anwendung auch höhere Konzentrationen zu verwirklichen sind.

Der Anteil der eingesetzten Vernetzer ist abhängig von deren Molmasse und Funktionalität und beträgt in der Regel zwischen 0,5 und 30 Gew.%, bevorzugt zwischen 1 und 20 Gew.%, und besonders bevorzugt zwischen 1 und 15 Gew.%, bezogen auf den Polymeranteil in der Quellpaste. Diese Mischung kann aufgrund der hervorragenden Stabilität als solche gelagert werden und in den Handel kommen oder aber auch erst beim Verarbeiter angesetzt werden, wobei dabei die Konzentration des Vernetzers den gewünschten Produkteigenschaften wie Quellgeschwindigkeit, Quellhöhe und Gelstabilität, angepaßt wird. Hierbei ist es wegen der Lagerstabilität möglich, die angesetzte Paste beim Verarbeiter über einen längeren Zeitraum zu lagern und mehrere Kampagnen damit zu fahren.

Als carboxylgruppenhaltige Monomeren kommen neben Acrylsäure noch Methacrylsäure, Maleinsäure, Maleinsäureanhydrid, Fumarsäure, Itaconsäure sowie deren Salze oder Mischungen dieser Monomere in Frage. Bevorzugt wird aber Acrylsäure bzw. Natriumacrylat eingesetzt.

Ein Einsatz von anderen Comonomeren ist genauso wie eine schwache Vorvernetzung möglich, wobei aber die carboxylgruppenhaltigen Monomeren immer über 75 Mol.% vorhanden sind. Sollte ein Vorvernetzer bei der Herstellung des Polymers eingesetzt werden, so muß gewährleistet sein, daß das Polymer immer noch in Form einer wäßrigen Lösung verarbeitet werden kann und nicht aufgrund einer zu hohen Vernetzung nur noch in Form von gequollenen Gelteilen vorliegt, die in einer Druckpaste nicht mehr verarbeitet werden können. Üblicherweise wird deshalb der Primärvernetzer zu höchstens 0,1 Mol.% eingesetzt.

Als nicht carboxylgruppenhaltige Monomere, die zu höchstens 20 Mol.% im Polymer eingebaut sind, sind beispielsweise, aber nicht ausschließlich (Meth)Acrylamid, Vinylacetat, Vinylsulfonsäure und deren Salze, 2-Acrylamido-2-methyl-propansulfonsäure und deren Salze, (Meth)allylalkohol und deren Alkoxylierungsprodukte und die Mono(meth)acrylsäureester von mehrwertigen Alkoholen oder von Alkoxylaten einwertiger Alkohole zu nennen. Die Comonomere werden zur Modifizierung der Polymereigenschaften eingesetzt, beispielsweise um die Haftung am Trägermaterial zu verbessern. Die Mitverwendung von Vinyl- oder (Meth)acrylatestern ist als Comonomer vorteilhaft zur Flexibilisierung von Folien geeignet, die aus den erfindungsgemäßen Quellpasten hergestellt werden können. Mit Sulfonat- bzw. Sulfonsäure enthaltenden Monomeren kann beispielsweise eine Verbesserung der Salzstabilität bei der Anwendung der vernetzten Quellpasten erreicht werden. Bevorzugt von diesen Monomeren wird die Gruppe, die aus Acrylamid, Methacrylamid, Hydroxyethylacrylat, Allylsulfonsäure, Methallylsulfonsäure, Acrylamidopropansulfonsäure und Mischungen dieser Monomeren besteht.

In dieser wäßrigen Polyacrylsäure können noch weitere nicht einpolymerisierte Zusatzstoffe mit vorteilhafter Wirkung enthalten sein. Insbesondere kommen hier Stoffe zur Verringerung der Sprödigkeit (Härte) des getrockneten Produkts, solche zur Verringerung der Klebrigkeit, zur Verbesserung der Druckviskosität und zur Erhöhung der Leitfähigkeit in Frage. So können zur Verbesserung der Gelstabilität und zur Einstellung der gewünschten Druckviskosität übliche, in Wasser wirksame Verdicker, wie etwa Cellulosederivate oder aber höher vernetzte Polyacrylate zugesetzt werden, wie sie z.B. unter der Bezeichnung "Cabloc CTF" von der Firma Stockhausen vertrieben werden. Diese quellen in der Polyacrylatlösung nicht wie üblich auf, verbessern aber das Viskositätsverhalten beim Druckvorgang deutlich. Die Zusatzstoffe sind in üblichen Mengen, vorteilhaft zu nicht mehr als 30 Gew.%, insbesondere zu nicht mehr als 20, und besonders bevorzugt zu nicht mehr als 10 Gew.%, bezogen auf die Quellpaste, vorhanden.

Die erfindungsgemäße Quellpaste weist bevorzugt eine Viskosität, bestimmt an einer 30 Gew.%-igen wäßrigen Lösung des eingesetzten Polymeren, von mindestens 800 mPas, vorzugsweise von mindestens 2 000 mPas und von höchstens 25 000 mPas, vorzugsweise von höchstens 20 000 mPas auf.

Die so hergestellte Quellpaste kann nach bekannten Methoden auf ein vorgefertigtes Flächengebilde oder auf Fäden aufgebracht werden. Bevorzugt wird dabei das Aufdrucken oder Aufrakeln mittels einer Schablone auf Gewebe oder Nonwoven zur Erreichung eines gleichmäßigen Musters, mit geregelten Abständen zwischen den einzelnen Pastenpunkten gewählt. Weiterhin ist es möglich, ein Nonwoven im Foulard mit dieser Paste zu tränken und anschließend auf den gewünschten Flüssigkeitsgehalt abzuquetschen. Auf Garne kann die Quellpaste aufgebracht werden, so wie dies z.B. in der EP 482 703 beschrieben wird.

Statt eines Gewebes kann auch eine Folie einseitig mit der Quellpaste bedruckt werden, wobei es wegen der Haftung der Pastenpunkte vorteilhaft ist, wenn die zu bedruckende Seite der Folie durch geeignete Maßnahmen aufgerauht bzw. mit einem dünnen Vlies beklebt wurde. Solcherart bedruckte Folien können besonders dort vorteilhaft eingesetzt werden, wo es wie z.B. bei Nachrichtenkabeln darauf ankommt, daß die Dicke der Wassersperrschicht nicht zu groß ausfällt. Es gibt eine Reihe von organischen Folienmaterialien, die die Temperaturbelastung während des Druck- und Vernetzungsvorgangs aushalten, so beispielsweise aber nicht ausschließlich Polyimid-, Polysulfon-, Polycarbonat-, Polyethylenterephthalat- und Polytetrafluorethylenfolien. Verwendet werden auch metallische und metallisierte Folien.

Anschließend muß das so aufgebrachte Polymer zur Vernetzung gebracht werden, was durch eine kurzzeitige thermische Behandlung erreicht werden kann. Die Dauer der thermischen Behandlung hängt dabei von Temperatur und vom Neutralisationsgrad der polymer-gebunden Carboxylfunktionen ab, sowie von der Temperaturstabilität des Trägermaterials. Auf jeden Fall muß die Vernetzungstemperatur unterhalb der Schrumpfungstemperatur des Trägers in Form von z.B. Gewebe/Nonwoven, Fäden oder Folie liegen. Sie liegt bei Flächengebilden üblicherweise zwischen 150°C und 250°C, bevorzugt zwischen 180 bis 200°C. Aus wirtschaftlichen Gründen beträgt die zur Vernetzung zur Verfügung stehende Zeit im allgemeinen weniger als 5, bevorzugt weniger als 2 Minuten. Dabei ist es möglich, die Trocknung und Vernetzung bei einer konstanten Temperatur durchzuführen oder ein Temperaturprogramm zu wählen, um etwa die Schritte Trocknung und Vernetzung bei unterschiedlichen Temperaturen ablaufen zu lassen. Auch kann ein kurzzeitige Nacherhitzung z.B. mittels IR-Strahler vorteilhaft sein.

Nach dem Trocknen und vernetzenden Tempern weist die erfindungsgemäße Quellpaste vorteilhaft eine Quellhöhe pro 100 g von mindestens 8 mm, vorzugsweise mindestens 10 mm, und besonders bevorzugt von mindestens 12 mm, und eine relative Quellhöhe nach 30 Sekunden von mindestens 4 mm/100 g auf, ferner eine Retention von mindestens 15 g/g Trockengewicht, vorzugsweise von mindestens 25 g/g, und besonders bevorzugt von mindestens 40 g/g Trockengewicht.

Auch ist es möglich, hochtemperaturstabile Fasern, wie z.B. Aramidfasem oder Glasfasern, mit der erfindungsgemäßen Quellpaste zu imprägnieren und anschließend thermisch zu behandeln. Da diese Fasern deutlich temperaturstabiler sind als Gewebe oder Vliese, aber nur Verweilzeiten von wenigen Sekunden wirtschaftlich realisierbar sind, gelangen hier Temperaturen bis zu 400°C zur Anwendung.

Die Herstellung trägerfreier Folien erfolgt zumeist auf einem wiederverwendbaren Zwischenträger, von dem die Folie nach der Vernetzung und gegebenenfalls nach einer Konditionierung abgezogen wird. Bezüglich des molekularen Polymeraufbaues ist darauf zu achten, daß gegebenenfalls durch die Verwendung von Comonomeren eine für den weiteren Gebrauch ausreichende Flexibilität der Folie erreicht wird.

Das fertige Substrat kann Verwendung in mehreren Industriebereichen finden, so in der Kabelindustrie, in der Hygieneindustrie, bei Lebensmittelverpackungen, in Anwendungen des Landschaftsbaus, in der Bekleidungsindustrie oder auch in der Beerdigungsbranche.

Zur Testung der Quellpaste wurde diese bei den zweidimensionalen Geweben jeweils auf einem Kämmertisch mittels Schablone auf ein Polyestergewebe aufgerakelt und anschließend im Umlufttrockenschrank getrocknet. Es wurde stets ein gleichmäßiges Muster von Punkten erhalten.

### Anwendungstechnische Messungen:

### Messung der Quellhöhe und Quellgeschwindigkeit:

Zur Messung der Quellhöhe und der Quellgeschwindigkeit wird ein kreisrunder Ausschnitt (25,4 cm² ) des beschichteten Flächengebildes in einen Kunststoffbecher mit einem Innendurchmesser von 80,5 mm und einer Höhe von 30 mm gegeben. Auf dieses Vlies wird zuerst ein dünnes Polyestervlies (Dicke 0,5 mm) und dann ein runder Stempel mit einem Durchmesser von 80 mm und einem Gewicht von 100 g gegeben. Dieser Stempel verfügt über 60 durchgehende Bohrungen von je 2 mm Durchmesser. Bei der Messung wird die Höhe der Stempeloberkante mit einem Meßgerät der Firma Mitutoyo (IDU 25) verfolgt. In den Becher werden 75 ml VE-Wasser (< 5µS) gegeben und der Anstieg der Stempeloberkante nach 30 Sekunden, 1 und 10 Minuten notiert (Doppelbestimmung). Zum besseren Vergleich der Quellhöhen bei unterschiedlichen Auflagen wird die nach 10 Minuten gemessene Quellhöhe durch die Trockenauflage pro m² geteilt und zum Erhalt ganzzahliger Werte mit 100 multipliziert.

Zur Bestimmung der relativen Quellhöhe wird wie zur Bestimmung der Quellhöhe verfahren mit der Ausnahme, daß der Nullwert der Quellhöhenmessung von dem Endwert abgezogen wird.

### Dichtigkeitstest für Fasern:

Der Test ist in der EP 482 703 Seite 4, Zeile 50 ff. vorbeschrieben.

### Bestimmung der Retention

Zur Bestimmung der Retention wird ein kreisförmiges Stück des bedruckten Gewebes mit einem Durchmesser von 3 cm in einem handelsüblichen Teebeutel eingeschweißt. Der Beutel wird anschließend für dreißig Minuten in einer Schale mit dest.-Wasser getaucht, 10 Minuten lang aufgehängt und bei 1200 UpM in einer handelsüblichen Wäscheschleuder 5 Minuten lang geschleudert. Es wird das Gewicht des geschleuderten Teebeutels bestimmt. Zur Berechnung der Retention wird vom Gewicht des geschleuderten Teebeutels das Gewicht des trockenen Teebeutels mit Gewebe abgezogen und durch das Gewicht des aufgedruckten Polymers dividiert.

### Beispiele:

Die Zusammensetzung der Polymeren der Vernetzer und die Quellhöhe bzw. relative Quellhöhe der Pasten gemäß Beispielen bzw. Vergleichsbeispielen sind Tabelle 1 zu entnehmen.

### Beispiel 1:

Für den Druckversuch wurde eine Polyacrylsäure mit einem Neutralisationsgrad von 50% (Gegenion: Natrium), einer Produktviskosität (TS 32% in Wasser) von 12 300 mPas gemessen mit einem Brookfield-Viskosimeter bei Raumtemperatur und einem Molekulargewicht Mp von 120 000 g/mol sowie einem Mw von 155 000 g/mol (bestimmt mittels GPC gegen Polyacrylsäurestandard) und einem Anteil von Polymeren mit einem Molekulargewicht von unter 10 000 g/mol von weniger als 5 Gew.% genommen. Diese Polyacrylsäure wurde mit 3 Gew.% Imbetin SOR/060 (einem 6 EO-Sorbitol, Hersteller Kolb AG) und 3,5 Gew.% Cabloc CTF vermischt und anschließend mittels Lochschablone auf ein Polyestergewebe aufgedruckt. Das bedruckte Gewebe wurde im Trockenschrank bei 190°C 2 Minuten lang erhitzt. Das Produkt hatte eine Auflage von 16,5 g/m² und eine Quellhöhe von 2,38 mm nach 30 Sekunden, 2,6 mm nach 1 Minute und 2,8 mm nach 10 Minuten. Die relative Quellhöhe nach 30 Sekunden lag bei 12 mm/100 g. Der 10-Minuten-Wert pro 100 g Trockenauflage lag demnach bei 17 mm/100 g. Die Retention liegt bei 49,5 g/g Trockenauflage.

### Beispiel 2:

Es wurde wie im Beispiel 1 vorgegangen, nur wurde statt der reinen Polyacrylsäure ein Copolymer aus 95 Mol.% Acrylsäure und 5 Mol.% Acrylamid eingesetzt. In diesem Polymer lagen die Acrylsäurefunktionen zu 50 Mol.% als Natriumsalz vor. Dieses Polymer hat bei einer Trockensubstanz von 31,5% bei Raumtemperatur eine Viskosität von 10 700 mPas (bestimmt mit dem Brookfield-Rotationsviskosimeter).
Dieses Polymer hatte laut GPC (Vergleich zu Polyacrylsäurestandard) ein Mp von 160 000 g/mol und ein Mw von 200 000 g/mol. Der Anteil von Homologen mit einem Molekulargewicht von unter 10 000 g/mol lag bei unter 3%. Das nach dem Trocknen erhaltene Produkt hatte eine Trockenauflage von 18 g/m² und eine Quellhöhe von 1,71 mm nach 1 Minute und 1,82 mm nach 10 Minuten. Die relative Quellhöhe nach 30 Sek. lag bei 4,5 mm/100 g. Der 10-Minuten-Wert pro 100 g Auflage lag also bei 10 mm/100 g. Die Retention betrug 31,4 g/g.

### Beispiel 3:

Es wurde wie im Beispiel 1 vorgegangen, nur wurde statt der reinen Polyacrylsäure ein Terpolymer aus 94 Mol.% Acrylsäure, 5 Mol.% Acrylamid und 1 MoL% Methoxypolyethylenglykol( 1 000)methacrylsäureester (Bisomer S 10W) eingesetzt. Die Acrylsäure lag im Polymer zu 50% in der Form des Natriumsalzes vor. Das Polymer hatte bei Raumtemperatur eine Viskosität von 2180 mPas (gemessen mit Brookfield-Rotationsviskosimeter bei einer TS von 30%). Bei einer Trockenauflage von 17 g/m² wurden nach 1 Minute eine Quellhöhe von 1,94 mm und nach 10 Minuten eine von 2,36 mm bestimmt. Die relative Quellhöhe nach 30 Sekunden lag bei 5,82 mm/100 g. Der 10-Minuten-Wert pro 100 g Auflage lag also bei 13,9 mm/100 g. Die Retention wurde zu 68.5 g/g bestimmt.

### Beispiel 4:

Es wurde wie im Beispiel 1 vorgegangen, nur wurde das Gewebe nur 2 Minuten bei 185°C im Matthis-Trockner und anschließend 8 Sekunden unter der IR-Lampe erhitzt. Das Produkt hatte eine Trockenauflage von 19 g/m² und eine Quellhöhe von 2,2 mm nach 30 Sekunden, 2,3 mm nach 1 Minute und 2,5 mm nach 10 Minuten. Der 10-Minuten-Wert pro 100 g Trokkenauflage lag also bei 13 mm/100 g. Die Retention liegt bei 54 g/g Trockenauflage.

### Beispiel 5:

Es wurde wie in Beispiel 1 vorgegangen, nur wurde auf das Cabloc CTF verzichtet. Die fertige Mischung aus Polyacrylsäure und 3 Gew.% Imbetin SOR/060 hatte eine Viskosität von 10 300 mPas. Das Produkt hatte eine Trockenauflage von 17,1 g/m² und eine Quellhöhe von 2,11 mm nach 30 Sekunden, 2,18 mm nach 1 Minute und 2,21 mm nach 10 Minuten. Die relative Quellhöhe nach 30 Sekunden lag bei 9,82 mm/100 g. Der 10-Minuten-Wert pro 100 g Trockenauflage also bei 13 mm/100 g. Die Retention liegt bei 28 g/g Trockenauflage.

### Beispiel 6:

Es wird wie in Beispiel 1 vorgegangen, nur wird statt des Imbetins SOR/060 3,3 Gew.% eines Anlagerungsproduktes von vier Mol Ethylenoxid an Trimethylolpropan eingesetzt. Das bedruckte Gewebe wurde 2 Minuten bei 200°C im Trockenschrank erwärmt. Das Produkt hatte eine Trockenauflage von 16,3 g/m² und eine Quellhöhe von 1,26 mm nach 30 Sekunden, 1,59 mm nach einer Minute und 1,85 mm nach 10 Minuten. Die relative Quellhöhe nach 30 Sekunden lag bei 5,64 mm/100 g. Der 10-Minuten-Wert pro 100 g Trockenauflage lag also bei 11,3 mm/100 g. Die Retention liegt bei 36 g/g Trockenauflage.

### Beispiel 7:

Das Polymer nach Beispiel 1 wurde mit dest. Wasser 1:1 verdünnt, woraufhin eine Lösung mit einer Brookfield-Viskosität von 240 mPas resultierte. Diese Lösung wurde mit 1,5 Gew.% Imbetin SOR/060 vermischt und anschließend auf Aramidfasern aufgezogen. Die so behandelten Aramidfasem wurden mit einem Heißluftfön kurzzeitig thermisch behandelt. Die behandelten Aramidfasern wurden einem Quelltest wie in der EP 482 703, Seite 5 ab Zeile 50, beschrieben unterzogen. Dabei wurden Fasern mit einer Polymerauflage von 15 Gew.% erhalten. Diese beschichteten Fasern waren im Quelltest sofort dicht und behielten diese Dichtigkeit auch bis zum Testende nach 6 Tagen bei.

### Beispiel 8:

Das Polymer nach Beispiel 1 wurde mit 5 Gew.% eines 20 EO-Triethanolamins vermischt und ohne Cabloc mittels Lochschablone und Kämmertisch auf ein Polyestergewebe aufgebracht. Das beschichtete Gewebe wurde 3 Minuten bei 200°C getrocknet und mittels IR-Lampe 12 Sekunden nacherhitzt. Das Produkt hatte eine Trockenauflage von 22 g/m² und eine Quellhöhe von 2,0 mm nach 30 Sekunden, 2,4 mm nach 1 Minute und 2,6 mm nach 10 Minuten. Die relative Quellhöhe nach 30 Sekunden lag bei 6,82 mm/100 g. Der 10-Minuten-Quellhöhenwert beträgt also 11,8 mm/100 g Trockenauflage. Die Retention liegt bei 44 g/g Trockenauflage.

### Beispiel 9:

Das Polymer nach Beispiel 1 wurde mit dest. Wasser 1: 0,75 verdünnt und nach Zusatz von 3 Gew.% Imbetin SOR/060 in einem Foulard auf ein Polyestervlies ( Flächengewicht 100 g/m²) mit einer Durchlaufgeschwindigkeit von 2,4 m/min. aufgetragen. Die überstehende Flüssigkeit wurde zwischen zwei Gummiwalzen mit 2 bar Andruck abgequetscht. Anschließend wurde das feuchte Vlies bei 185°C fünf Minuten lang getrocknet. Es wurde ein Vlies mit einer Polymerauflage von 23,9 g/m² erhalten. Von diesem Vlies wurden die feste Absorption und die Zentrifugenretention nach 30 Minuten Tauchzeit (beschrieben in der DE 41 38 408, Seite 7, Zeile 43 ff mit 10 Minuten Tauchzeit) bestimmt. Feste Absorption: 26,9 g/g Polymer; Retention: 8,3 g/g Trockenauflage.

### Beispiel 10:

Es wurde wie im Beispiel 1 vorgegangen, mit Ausnahme, daß eine andere Polyacrylsäure eingesetzt wurde. Es handelte sich hierbei um eine zu 50% als Natriumsalz vorliegende Polyacrylsäure, die bei einer TS von 32 Gew.% eine Viskosität von 900 mPas (gemessen mit Brookfield Rotationsviskosimeter bei Raumtemperatur) aufweist und ein Mp von 15 000 g/mol und ein Mw von 39 500 g/mol (gemessen mittels GPC gegen Polyacrylsäurestandard) besitzt und bei der 30 Gew.% der Molekulargewichtsanteile unter 10 000 g/mol liegen. Die Quellhöhe nach 10 Minuten lag bei 1,65 mm bei einer Auflage von 14 g/m². Dies entspricht einer 10-Minuten-Quellhöhe pro 100 g Auflage von 11,8 mm. Die Retention lag bei 11,2 g/g.

### Beispiel 11:

Ein Polymerisat wie im Beispiel 1 beschrieben, aber mit einem Neutralisationsgrad von 45 Mol.% und einer Viskosität von 14 800 mPas bei 31 % TS wurde mit 3 Gew.% Imbetin SOR/060 verrührt, gedruckt und 2 Minuten bei 190°C vernetzt. Retention: 14 g/g, Quellhöhe nach 10 Minuten: 1,6 mm, Trockenauflage: 18 g/m², Quellhöhe pro 100 g: 8,9 mm.

### Beispiel 12:

Es wurde wie im Beispiel 1 vorgegangen, nur daß das Polymerisat einen Neutralisationsgrad von 55 Mol.%, eine Viskosität von 14 900 mPas und eine TS von 30 % aufwies. Retention: 59 g/g, Quellhöhe nach 10 Minuten: 2,0 mm, Trockenauflage: 19,5 g/m^{2.}, Quellhöhe pro 100 g: 10,3 mm.

### Beispiel 13:

Aus einer wäßrigen, 30 Gew.%igen Lösung einer mit Natronlauge zu 50 Mol.% neutralisierten Polyacrylsäure (21 200 mPas) wurde mit 3 Gew.% Imbetin SOR/060 eine Quellpaste hergestellt, die Gewebeauftrag und nach Vernetzung (2 Min., 190°C) folgende Eigenschaften aufwies: Trockenauflage 9,2 g/m², Retention 50,3 g/g, Quellhöhe nach 10 Minuten 1,6 mm, Quellhöhe pro 100 g = 17,4 mm, relative Quellhöhe nach 30 Sekunden 7,61 mm/100 g.

### Beispiel 14:

Es wird das Beispiel 13 mit der Maßgabe wiederholt, daß der Vernetzer bei 90°C innerhalb 1 Stunde zugegeben wird. Trockenauflage 19 g/m², Retention 21 g/g, Quellhöhe nach 10 Minuten 1,9 mm, Quellhöhe pro 100 g = 10 mm, relative Quellhöhe nach 30 Sekunden 4,21 mm/100 g.

### Beispiel 15:

Es wurde wie im Beispiel 5 vorgegangen, nur wurde statt des Polyestergewebes eine Polyimidfolie (Dicke 50 µm) als Substrat eingesetzt und bedruckt. Die bedruckte Folie wurde im Trockenschrank 2 Minuten lang auf 195°C erhitzt. Das Produkt hatte eine Trockenauflage von 16 g/m² und eine Quellhöhe von 1,95 mm nach 30 Sekunden, 1,99 mm nach 1 Minute und 2,12 mm nach 10 Minuten. Die relative Quellhöhe nach 30 Sekunden lag bei 10,94 mm/100 g. Der 10-Minuten Wert pro 100 g Trockenauflage beträgt 13,2 mm/100 g, die Retention lag bei 48 g/g Trockenauflage.

### Beispiel 16:

Die fertige Mischung aus Beispiel 5 wurde sechs Monate gelagert und erneut vermessen: Viskosität 10 200 mPas. Das Produkt wurde wie im Beispiel 5 gedruckt. Trockenauflage 16,6 g/m² und eine Quellhöhe nach 30 Sekunden von 2,05 mm; nach einer Minute von 2,11 mm und nach 10 Minuten von 2,10 mm. Die relative Quellhöhe nach 30 Sekunden lag bei 9,70 mm/100 g. Der 10-Minuten-Wert pro 100 g Trockenauflage lag bei 12,7 mm/100 g. Die Retention liegt bei 30 g/g Polymer.

### Vergleichsbeispiel 1:

Isobam 10 (Maleinsäure/Isobutylen-Copolymer) wird mit Wasser und Natronlauge wie im Beispiel 3 der EP 361 842 A2 beschrieben, verseift. Anschließend wurde das verseifte Produkt bei 90°C binnen einer Stunde mit der angegebenen Menge Butandiol und Pentaerythrit verrührt und dann auf ein Polyestergewebe aufgedruckt. Die Vernetzung wurde bei 190°C für 2 Min. durchgeführt. Es ergaben sich die folgenden Eigenschaften:
Trockenauflage 30,3 g/m², Retention 8,9 g/g, Quellhöhe nach 10 Minuten 1,3 mm, Quellhöhe pro 100 g = 4,2 mm.

### Vergleichsbeispiel 2-5:

Es wurde wie im erfindungsgemäßen Beispiel 1 vorgegangen, nur daß die Polyacrylsäure Neutralisationsgrade von 3,5 Gew.%, 25 Gew.%, 75 Gew.% und 100 Gew.% hatte. Von den Produkten wurde die Quellhöhe und die Retention bestimmt und in der nachfolgenden Tabelle bzw. Tabelle 1 angegeben.

| **Vergleichsbeispiel** | **Retention** |
|---|---|
| 2 | 0,4 g/g |
| 3 | 0 g/g |
| 4 | 0,3 g/g |
| 5 | 0 g/g |

### Vergleichsbeispiel 6:

Entsprechend der Lehre der EP 357 474 wird eine Polyacrylsäure, TS 30%, pH 5,0, Viskosität 250 mPas mit 4 Gew.% Eisen(II)sulfat bezogen auf die WS verrührt. Bei der Lagerung bei Raumtemperatur weist das Produkt nach 6 Stunden bereits eine Viskosität von 1400 mPas auf. Nach weiteren 24 Stunden eine von über 100 000 mPas. Das Produkt läßt sich mit dieser Viskosität nicht mehr wie angegeben sprühen.

### Vergleichsbeispiel 7:

Entsprechend der Lehre der DE 195 21 431 wurde ein vollständig neutralisiertes mit TMPTA anvernetztes Polynatriumacrylat hergestellt. TS 30%, Viskosität 22 700 mPas. Dieses Produkt wurde mit 1,5 Gew.% Ethylenglykolbisglycidylether verrührt und die Veränderung der Viskosität bestimmt. Nach einer Stunde Lagerung bei Raumtemperatur hatte das Produkt bereits eine Viskosität von 27 000 mPas. Nach 24 Stunden Lagerung bei Raumtemperatur war das Produkt stichfest, so daß keine Viskosität mehr bestimmt werden konnte und eine Verarbeitung nicht mehr möglich war.

### Vergleichsbeispiel 8:

Es wurde eine Quellpaste unter Verwendung einer 30 Gew.%igen wäßrigen Lösung eines Copolymerisates aus 30 Mol.% Acrylsäure, 30 Mol.% Natriumacrylat und 40 Mol.% Acrylamid und einer Viskosität von 7 800 mPas und 2 Gew.% Butandiol-1,4 hergestellt. Nach dem Auftrag auf ein Polyestergewebe und der zweiminütigen Vernetzung bei 190°C betrug die Trockenauflage 10,2 g/m². Das Produkt wies eine Retention von 36,6 g/g, eine Quellhöhe nach 10 Minuten von 1,1 mm und eine Quellhöhe pro 100 g von 10,8 mm auf, relative Quellhöhe nach 30 Sekunden 2,94 mm/100 g.

### Vergleichsbeispiel 9:

Es wurde wie im Vergleichsbeispiel 8 verfahren, jedoch bestand das Polymer aus 20 Mol.% Acrylsäure, 20 Mol.% Natriumacrylat und 60 Mol.% Acrylamid und hatte eine Viskosität von 14 460 mPas bei 27% TS. Die Eigenschaften waren wie folgt: Trockenauflage 12,9 g/m², Retention 6,9 g/g, Quellhöhe nach 10 Minuten 1,3 mm, Quellhöhe pro 100 g = 8,5 mm, relative Quellhöhe nach 30 Sekunden 3,1 mm/100 g.

### Vergleichsbeispiel 10:

Es wurde wie im Vergleichsbeispiel 8 verfahren, jedoch bestand das Polymer aus 10 Mol.% Acrylsäure, 10 Mol.% Natriumacrylat und 80 Mol.% Acrylamid, die Viskosität betrug 17 000 mPas und die Ansatzkonzentration betrug 22 Gew.%. Die Eigenschaften waren wie folgt: Trockenauflage 12,7 g/m², Retention 9,7 g/g, Quellhöhe nach 10 Minuten 1,3 mm, Quellhöhe pro 100 g = 10,2 mm, relative Quellhöhe nach 30 Sekunden 2,36 mm/100 g.

### Vergleichsbeispiel 11:

Zu der Polymerlösung aus Beispiel 2 wurden innerhalb von 1 Stunde 1,4 Gew.% Butandiol-1,4 und 2,4 Gew.% Pentaerythrit zugesetzt. Nach der Vernetzung (2 Min., 190°C) wurden die folgenden Eigenschaften gemessen: Trockenauflage: 17,6 g/m², Retention 23,5 g/g, Quellhöhe nach 10 Minuten 2,15 mm, Quellhöhe pro 100 g 12,2 mm, relative Quellhöhe nach 30 Sekunden 2,84 mm/100 g.

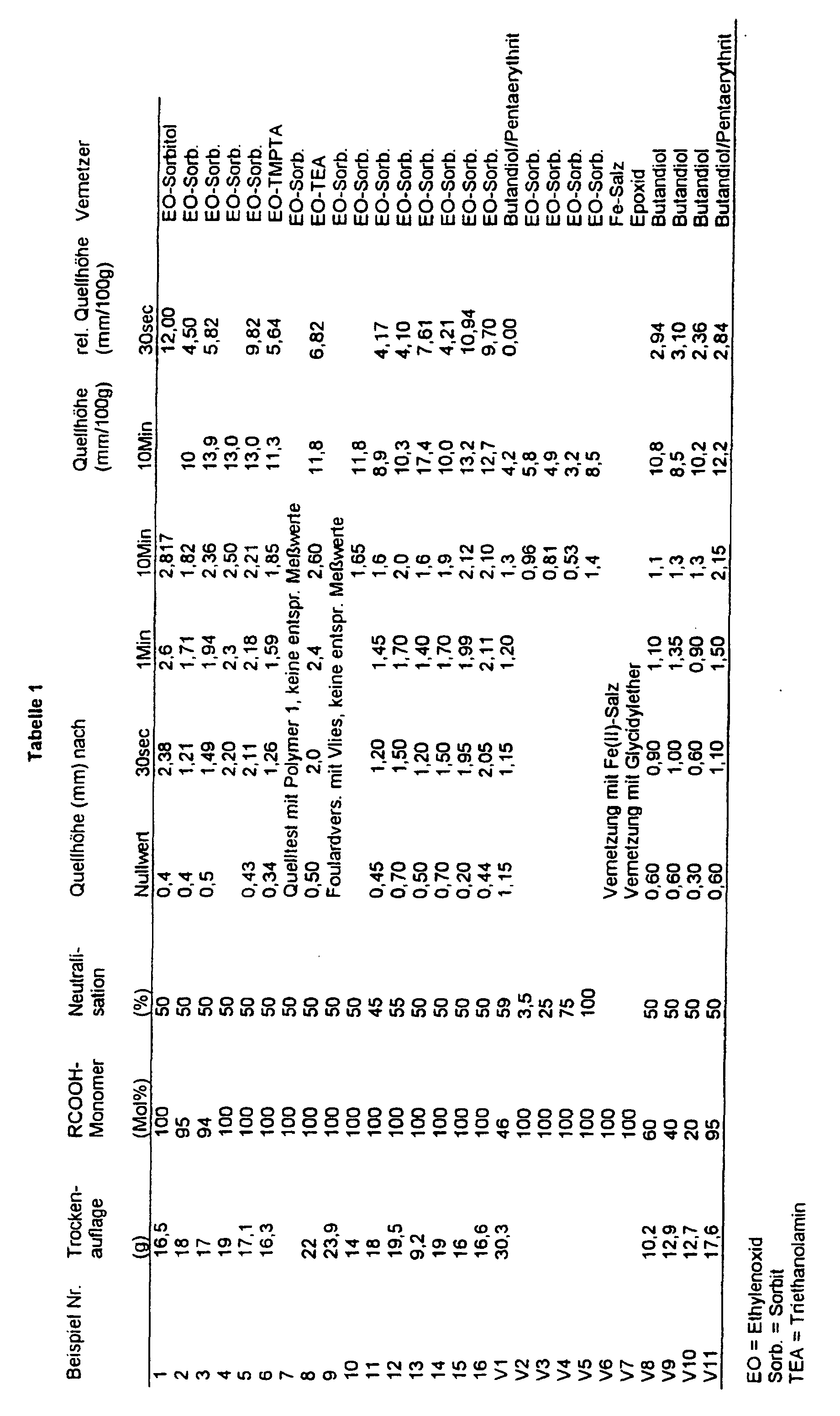

## Patentansprüche

1. Quellpaste aus einer wäßrigen Abmischung wenigstens eines wasserlöslichen, Carboxylgruppen enthaltenden Polymeren und wenigstens eines mehrfachfunktionellen Alkohols sowie gegebenenfalls weiteren Zusatzstoffen, **dadurch gekennzeichnet, daß** das Polymer aus mehr als 75 Mol. % carboxylgruppenhaltigen Monomeren aufgebaut ist, deren Carboxylgruppen zu 40 bis 65 Mol.% als Salz vorliegen, und der mehrfachfunktionelle Alkohol alkoxyliert und in einer Konzentration von 0,5 bis 30 Gew.%, bezogen auf das Gewicht des eingesetzten Polymers, vorhanden ist.

2. Quellpaste nach Anspruch 1, **dadurch gekennzeichnet, daß** das carboxylgruppenhaltige Polymer neben den Carboxylgruppen enthaltenden Monomeren aus weiteren, wasserlöslichen Comonomeren aufgebaut ist.

3. Quellpaste nach Anspruch 1 oder 2, **dadurch gekennzeichnet, daß** als Carboxylgruppen enthaltenden Monomere Acrylsäure, Methacrylsäure, Maleinsäure, Maleinsäureanhydrid, Fumarsäure, Itaconsäure, Acrylsäure oder Mischungen davon eingesetzt werden.

4. Quellpaste nach einem der Ansprüche 1 bis 3, **dadurch gekennzeichnet, daß** als wasserlösliche Comonomere Acrylamid, Methacrylamid, Hydroxyethylacrylat, Allylsulfonsäure, Methallylsulfonsäure, Acrylamidopropansulfonsäure oder deren Mischungen eingesetzt werden.

5. Quellpaste nach einem der Ansprüche 1 bis 4, **dadurch gekennzeichnet, daß** die Carboxylgruppen als Na-, K-, Ammonium-, Alkylammonium und Alkanolammonium-Salze vorliegen.

6. Quellpaste nach einem der Ansprüche 1 bis 5, **dadurch gekennzeichnet, daß** die mehrfachfunktionellen Alkohole aus der Gruppe Ethylenglykol, Propylenglykol, Glycerin, Butandiol, Trimethylolpropan, Erythrit, Pentaerythrit und hydrierte Zucker ausgewählt sind.

7. Quellpaste nach einem der Ansprüche 1 bis 6, **dadurch gekennzeichnet, daß** die mehrfachfunktionellen Alkohole ethoxyliert sind.

8. Quellpaste nach einem der Ansprüche 1 bis 7, **dadurch gekennzeichnet, daß** die mehrfachfunktionellen Alkohole mit mindestens 1 Mol Ethylenoxid pro Mol Alkohol, vorzugsweise mit mindestens 1 Mol Ethylenoxid pro Mol OH-Gruppe ethoxyliert sind.

9. Quellpaste nach einem der Ansprüche 1 bis 8, **dadurch gekennzeichnet, daß** der mehrfachfunktionelle Alkohol ein Alkoxylierungsprodukt, bevorzugt Ethoxylierungsprodukt eines Amins und/oder eines Aminoalkohols ist.

10. Quellpaste nach einem der Ansprüche 1 bis 9, **dadurch gekennzeichnet, daß** die Carboxylgruppen zu 45 bis 60 Mol.% neutralisiert sind.

11. Quellpaste nach einem der Ansprüche 1 bis 10, **dadurch gekennzeichnet, daß** der mehrfachfunktionelle alkoxylierte Alkohol in einer Konzentration von 1 bis 20, vorzugsweise 1 bis 15 Gew.%, bezogen auf das eingesetzte Polymer, vorliegt.

12. Quellpaste nach einem der Ansprüche 1 bis 11, **dadurch gekennzeichnet, daß** weitere Zusatzstoffe, insbesondere in Form von Verdickem, Weichmachern, Füll- und Farbstoffen, enthalten sind.

13. Quellpaste nach einem der Ansprüche 1 bis 12, **dadurch gekennzeichnet, daß** die Viskosität einer 30 Gew.%igen wäßrigen Lösung des eingesetzten Polymers einen Wert von 800 mPas, vorzugsweise von 2 000 mPas nicht unterschreitet und einen Wert von 25 000 mPas, vorzugsweise von 20 000 mPas, nicht überschreitet.

14. Quellpaste nach einem der Ansprüche 1 bis 13, **dadurch gekennzeichnet, daß** sie nach dem Trocknen und vernetzenden Tempern bei 150 bis 250°C eine Quellhöhe pro 100 g von mindestens 8 mm, vorzugsweise mindestens 10 mm, und besonders bevorzugt von mindestens 12 mm, aufweist.

15. Quellpaste nach einem der Ansprüche 1 bis 13, **dadurch gekennzeichnet, daß** sie nach dem Trocknen und vernetzenden Tempern bei 150 bis 250°C eine Retention von mindestens 15 g/g Trockengewicht, vorzugsweise von mindestens 25 g/g, und besonders bevorzugt mindestens 40 g/g, Trockengewicht aufweist.

16. Verwendung der Quellpaste nach einem der Ansprüche 1 bis 13 zur Herstellung von wasserquellbaren Garnen, Geweben, Vliesstoffen oder Folien durch Aufbringen der Quellpaste auf den Träger, gefolgt von einer thermischen Nachbehandlung zwecks Trocknung und Vernetzung.

17. Verwendung nach Anspruch 16, **dadurch gekennzeichnet, daß** die thermische Nachbehandlung beim Aufbringen auf Träger im Bereich von 150°C bis 250°C vorgenommen wird.

18. Verwendung nach Anspruch 16, **dadurch gekennzeichnet, daß** die thermische Nachbehandlung beim Aufbringen auf temperaturstabile Träger bei Temperaturen bis zu 400°C vorgenommen wird.

19. Verwendung nach Anspruch 16, **dadurch gekennzeichnet, daß** zur Herstellung einer wasserquellbaren Folie die Quellpaste zunächst auf einen vorzugsweise wiederverwendbaren Zwischenträger aufgebracht wird, von dem die Folie nach der Vernetzung und ggf. einer weiteren Konditionierung abgezogen wird.

## Claims

1. A swelling paste, comprising an aqueous mixture of at least one water-soluble polymer containing carboxyl groups, and at least one multifunctional alcohol and optionally further additives, **characterized in that** the polymer is polymerized from more than 25 mol-% of carboxyl group-containing monomers of which 40 to 65 mol-% of their carboxyl groups are present as salt, and the multifunctional alcohol is alkoxylated and present at a concentration of from 0.5 to 30 wt.-%, based on the weight of polymer employed.

2. The swelling paste according to claim 1, **characterized in that** the carboxyl group-containing polymer is made up of carboxyl group-containing monomers and other, water-soluble comonomers.

3. The swelling paste according to claim 1 or 2, **characterized in that** the carboxyl group-containing monomers used are acrylic acid, methacrylic acid, maleic acid, maleic anhydride, fumaric acid, itaconic acid, acrylic acid or mixtures thereof.

4. The swelling paste according to any of claims 1 to 3, **characterized in that** the water-soluble comonomers used are acrylamide, methacrylamide, hydroxyethyl acrylate, allylsulfonic acid, methallylsulfonic acid, and acrylamidopropanesulfonic acid or mixtures thereof.

5. The swelling paste according to any of claims 1 to 4, **characterized in that** the carboxyl groups are present as Na, K, ammonium, alkylammonium, and alkanolammonium salts.

6. The swelling paste according to any of claims 1 to 5, **characterized in that** the multifunctional alcohols are selected from the group of ethylene glycol, propylene glycol, glycerol, butanediol, trimethylolpropane, erythritol, pentaerythritol, and hydrogenated sugars.

7. The swelling paste according to any of claims 1 to 6, **characterized in that** the multifunctional alcohols are ethoxylated.

8. The swelling paste according to any of claims 1 to 7, **characterized in that** the multifunctional alcohols are ethoxylated using at least 1 mol of ethylene oxide per mol of alcohol, preferably using at least 1 mol of ethylene oxide per mol of OH group.

9. The swelling paste according to any of claims 1 to 8, **characterized in that** the multifunctional alcohol is an alkoxylation product, preferably ethoxylation product of an amine and/or amino alcohol.

10. The swelling paste according to any of claims 1 to 9, **characterized in that** the neutralization degree of the carboxyl groups is from 45 to 60 mol-%.

11. The swelling paste according to any of claims 1 to 10, **characterized in that** the multifunctional alkoxylated alcohol is present at a concentration of from 1 to 20 wt.-%, preferably 1 to 15 wt.-%, based on polymer employed.

12. The swelling paste according to any of claims 1 to 11, **characterized in that** further additives, in particular in the form of thickeners, plasticizers, fillers and dyes, are present.

13. The swelling paste according to any of claims 1 to 12, **characterized in that** the viscosity of a 30 wt.-% aqueous solution of the polymer employed is not below a value of 800 mPa·s, preferably not below 2000 mPa·s, and not above a value of 25,000 mPa.s, preferably not above 20,000 mPa·s.

14. The swelling paste according to any of claims 1 to 13, **characterized in that** it has a swelling height per 100 g of at least 8 mm, preferably at least 10mm, and particularly preferably of at least 12mm, after drying and crosslinking at 150-250°C.

15. The swelling paste according to any of claims 1 to 13, **characterized in that** it has a retention of at least 15 g/g dry weight, preferably of at least 25 g/g, and particularly preferably at least 40 g/g, dry weight after drying and crosslinking at 150-250°C.

16. The use of the swelling paste according to one of claims 1 to 13 for producing water-swellable yarns, fabrics, nonwovens or films, by applying the swelling paste to a support, followed by a thermal subsequent treatment to dry and crosslink.

17. The use according to claim 16, **characterized in that** the subsequent thermal treatment is effected within a range of from 150°C to 250°C when applying to a support.

18. The use according to claim 16, **characterized in that** the subsequent thermal treatment is effected at temperatures of up to 400°C when applying to thermally stable supports.

19. The use according to claim 16, **characterized in that** in the production of a water-swellable film, the swelling paste is initially applied to a preferably reusable intermediate support, from which the film is removed after crosslinking and optional further conditioning.

## Revendications

1. Pâte de gonflement provenant d'un mélange aqueux d'au moins un polymère hydrosoluble, contenant des groupements carboxyles et d'au moins un alcool polyfonctionnel ainsi que, le cas échéant, d'adjuvants supplémentaires, **caractérisée en ce que** le polymère est constitué de plus de 75% en moles de monomères contenant des groupements carboxyles, dont les groupements carboxyles sont présents de 40 à 65% en moles en tant que sel, et **en ce que** l'alcool polyfonctionnel est alcoxylé et est présent dans une concentration de 0,5 à 30% en poids, par rapport au poids du polymère utilisé.

2. Pâte de gonflement selon la revendication 1, **caractérisée en ce que** le polymère contenant des groupements carboxyles est constitué, en plus des monomères contenant des groupements carboxyles, de comonomères hydrosolubles supplémentaires.

3. Pâte de gonflement selon la revendication 1 ou 2, **caractérisée en ce que** l'on utilise, en tant que monomères contenant des groupements carboxyles, l'acide acrylique, l'acide méthacrylique, l'acide maléique, l'anhydride de l'acide maléique, l'acide fumarique, l'acide itaconique, l'acide acrylique ou des mélanges de ces derniers.

4. Pâte de gonflement selon l'une quelconque des revendications 1 à 3, **caractérisée en ce que** l'on utilise, en tant que comonomères hydrosolubles, l'acrylamide, le méthacrylamide, l'acrylate d'hydroxyéthyle, l'acide allylsulfonique, l'acide méthallylsulfonique, l'acide acrylamidopropanesulfonique ou leurs mélanges.

5. Pâte de gonflement selon l'une quelconque des revendications 1 à 4, **caractérisée en ce que** les groupements carboxyles se présentent en tant que sels de Na, de K, d'ammonium, d'alkyl-ammonium et d'alcanol-ammonium.

6. Pâte de gonflement selon l'une quelconque des revendications 1 à 5, **caractérisée en ce que** les alcools polyfonctionnels sont sélectionnés parmi le groupe éthylèneglycol, propylèneglycol, glycérine, butanediol, triméthylolpropane, érythritol, pentaérythritol et sucres hydrogénés.

7. Pâte de gonflement selon l'une quelconque des revendications 1 à 6, **caractérisée en ce que** les alcools polyfonctionnels sont éthoxylés.

8. Pâte de gonflement selon l'une quelconque des revendications 1 à 7, **caractérisée en ce que** les alcools polyfonctionnels sont éthoxylés à l'aide d'au moins 1 mole d'oxyde d'éthylène par mole d'alcool, de préférence à l'aide d'au moins 1 mole d'oxyde d'éthylène par mole de groupements OH.

9. Pâte de gonflement selon l'une quelconque des revendications 1 à 8, **caractérisée en ce que** l'alcool polyfonctionnel est un produit d'alcoxylation, de préférence un produit d'éthoxylation d'une amine et/ou d'un aminoalcool.

10. Pâte de gonflement selon l'une quelconque des revendications 1 à 9, **caractérisée en ce que** les groupements carboxyles sont neutralisés jusqu'à raison de 45 à 60 % en moles.

11. Pâte de gonflement selon l'une quelconque des revendications 1 à 10, **caractérisée en ce que** l'alcool alcoxylé polyfonctionnel se présente dans une concentration de 1 à 20, de préférence de 1 à 15 % en poids, par rapport au polymère utilisé.

12. Pâte de gonflement selon l'une quelconque des revendications 1 à 11, **caractérisée en ce que** des adjuvants supplémentaires y sont contenus, en particulier, sous la forme d'agents épaississants, de plastifiants, de charges et de colorants.

13. Pâte de gonflement selon l'une quelconque des revendications 1 à 12, **caractérisée en ce que** la viscosité d'une solution aqueuse à raison de 30 % en poids du polymère utilisé ne passe pas en dessous d'une valeur de 800 mPas, de préférence de 2 000 mPas et ne dépasse pas une valeur de 25 000 mPas, de préférence de 20 000 mPas.

14. Pâte de gonflement selon l'une quelconque des revendications 1 à 13, **caractérisée en ce qu'**elle présente, après le séchage et la trempe réticulante à une température de 150 à 250°C, une hauteur de gonflement par 100 g d'au moins 8 mm, de préférence d'au moins 10 mm, et particulièrement de préférence d'au moins 12 mm.

15. Pâte de gonflement selon l'une quelconque des revendications 1 à 13, **caractérisée en ce qu'**elle présente, après le séchage et la trempe réticulante à une température de 150°C à 250°C, une rétention d'au moins 15 g/g de poids sec, de préférence d'au moins 25 g/g, et particulièrement de préférence d'au moins 40 g/g de poids sec.

16. Utilisation de la pâte de gonflement selon l'une quelconque des revendications 1 à 13, en vue de la fabrication de fils, de tissus, d'étoffes non-tissées ou de feuilles gonflables à l'eau par application de la pâte de gonflement sur le support, application suivie d'un post-traitement thermique en vue du séchage et de la réticulation.

17. Utilisation selon la revendication 16, **caractérisée en ce que** le post-traitement thermique est effectué par application sur le support dans le domaine de 150°C à 250°C.

18. Utilisation selon la revendication 16, **caractérisée en ce que** le post-traitement thermique est effectué par application sur des supports stables vis-à-vis de la température à des températures allant jusqu'à 400°C.

19. Utilisation selon la revendication 16, **caractérisée en ce qu'**en vue de la fabrication d'une feuille gonflable à l'eau, l'on applique la pâte de gonflement tout d'abord sur un support intermédiaire de préférence ré-utilisable, duquel la feuille est retirée après la réticulation et, le cas échéant, après un conditionnement supplémentaire.
